# EUROPÄISCHE PATENTSCHRIFT

(11) **EP 1 184 224 B1**
(45) Veröffentlichungstag und Bekanntmachung des Hinweises auf die Patenterteilung: **15.03.2006**
(21) Anmeldenummer: 01119087.3
(22) Anmeldetag: 08.08.2001
(51) Int. Cl.: B60R 5/00

(54) **Transportbehälter-Einrichtung für Fahrzeuge, wie z.B. Durchladeeinrichtung**
Transport container device for vehicles, e.g. device with loading opening
Dispositif à conteneur de transport pour véhicules, p.ex. dispositif à évidement de chargement

(30) Priorität: 30.08.2000 DE 10042812; 05.07.2001 DE 10132081
(43) Veröffentlichungstag der Anmeldung: 06.03.2002
(73) Patentinhaber: BOS GmbH & Co. KG, 73760 Ostfildern (DE)
(72) Erfinder: Butz, Peter, 20149 Hamburg (DE); Sitzler, Wolfgang, 42111 Wuppertal (DE)
(74) Vertreter: Ostriga, Sonnet, Wirths & Roche

(56) Entgegenhaltungen:
- DE-A- 3 447 323
- DE-A- 3 738 931
- DE-A- 19 519 507
- DE-U- 9 010 405
- DE-U- 29 711 197
- DE-U- 29 803 305

## Beschreibung

Die Erfindung betrifft eine Transportbehälter-Einrichtung für Fahrzeuge, wie z. B. Durchladeeinrichtung, insbesondere für den sitzlehnen-oder kofferraumwandseitigen Einbau in Personenkraftwagen entsprechend dem Oberbegriff des Anspruch 1.

Eine solche Transportbehälter-Einrichtung ist in der DE 37 38 931 C2 beschrieben.

Die bekannte Transportbehälter-Einrichtung weist einen Einbaurahmen mit einem einen Anschlag bildenden flanschartigen Rand auf, welcher einen Gegenanschlag eines karosserieseitigen Halterahmens übergreift. Der Halterahmen gemäß der DE 37 38 931 C2 ist von festen Karosserieteilen gebildet. Der untere Halterahmen-Querschenkel besteht aus einem Karosserieholm, dessen trapezförmiger Querschnitt sich nach oben hin verjüngt. Dieser Karosserieholm bildet eine halterahmenseitige Schwenkwidenagerstelle.

Der Einbaurahmen der bekannten Einrichtung weist unterhalb seines unteren Einbaurahmen-Querschenkeis ein sattelförmiges Halteblech auf. Zu seinem Einbau wird der bekannte Einbaurahmen mit seinem sattelförmigen Halteblech durch die Einbauöffnung des Durchladekanals hindurch auf den Karosserieholm trapezförmigen Querschnitts aufgesetzt. Sattelförmiges Halteblech und trapezförmiger Karosserieholm bilden so eine Schwenkachse, um die herum der Einbaurahmen in seine Einbauposition hinein geschwenkt werden kann, in welcher der flanschartige Rand, also der Anschlag des Einbaurahmens, an dem vom karosserieseitigen Halterahmen gebildeten Gegenanschlag anliegt. Diese Einbauposition wird durch eine Riegelanordnung lösbar gesichert.

Ausgehend von der eingangs beschriebenen Transportbehälter-Einrichtung, welche wegen ihres verschwenkbaren Einbaurahmens bereits einen bequemen raschen Einbau gestattet, liegt der Erfindung die Aufgabe zugrunde, unter Beibehaltung der vorteilhaften Einbauhandhabung die Transportbehälter-Einrichtung baulich einfacher zu gestalten.

Diese Aufgabe wird entsprechend der Gesamtheit der Merkmale des Anspruchs 1 gelöst.

Erfindungsgemäß erstreckt sich die Schwenkachse quer zu den beiden einander gegenüberliegenden Hauptschenkeln in einem Bereich zwischen zwei Querschenkeln jeweils sowohl des Halterahmens als auch des Einbaurahmens. Dabei ist in der Einbausituation des Einbaurahmens dessen Anschlag von der Schwenkachse distanziert und der Einbauöffnung zugewandt und liegt zudem an dem der Einbauöffnung abgewandten Gegenanschlag des Halterahmens an.

Die vorbeschriebenen erfindungsgemäßen Merkmale bedeuten eine erhebliche bauliche Vereinfachung, wodurch insbesondere der von der DE 37 38 931 C2 bekannte untere Halterahmen-Querschenkel trapezförmigen Querschnitts und das dazu korrespondierende sattelförmige Blechteil am unteren Einbaurahmen-Querschenkel entbehrlich sind.

Die erfindungsgemäße Transportbehälter -Einrichtung benötigt an den beiden gegenüberliegenden Hauptschenkeln des Einbaurahmens nur jeweils eine Schwenklagerstelle, welche jeweils an einer Schwenkwiderlagerstelle an den beiden halterahmenseitigen Hauptschenkeln angreift.

Die im Eingriff miteinander befindlichen Schwenklagerstellen und Schwenkwiderlagerstellen bilden so eine gewissermaßen zusammenfügbare Schwenkachse. Es handelt sich demnach nicht um eine körperliche sondern um eine geometrische Schwenkachse.

Hierdurch kann der Einbaurahmen verschwenkt werden, so dass sich dessen von der Schwenkachse distanzierter und der Einbauöffnung zugewandter Anschlag an den halterahmenseitigen Gegenanschlag, der der Einbauöffnung abgewandt ist, anlegen kann. Zugleich oder nachfolgend wird die Einbausituation des Einbaurahmens durch die von der Schwenkachse distanzierte Riegelanordnung lösbar arretiert, d.h., ein ungewolltes Zurückschwenken des Einbaurahmens in dessen Entnahmeposition wird blockiert.

Die Erfindung gestattet jegliche Positionierung der Schwenkachse und auch der Kombination Anschlag des Einbaurahmens/Gegenanschlag des Halterahmens.

Indes wird die bevorzugte erfindungsgemäße Ausführungsform eine horizontale Schwenkachse und den Anschlag an dem unteren Einbaurahmen-Querschenkel sowie den Gegenanschlag an dem unteren Halterahmen-Querschenkel aufweisen.

Gleichermaßen ist es beispielsweise denkbar, bei Bedarf die Schwenkachse aufrecht zu positionieren und dabei den Anschlag des Einbaurahmens sowie den Gegenanschlag des Halterahmens jeweils einem aufrechten seitlichen Querschenkel zuzuordnen.

Wie von anderen Transportbehälter-Einrichtungen (vgl. z.B. DE-Gebrauchsmuster 297 11 197) bekannt, kann auch bei der erfindungsgemäßen Transportbehälter-Einrichtung der Einbaurahmen Teil oder Anbauteil eines beliebigen Behältermoduls od. dgl. sein.

Eine für die Praxis bevorzugte zweckmäßige Ausführungsform besteht indessen darin, den Einbaurahmen zugleich als Aufnahmeraum für eine zusammengefaltete schlauch- oder sackartige Transportvorrichtung, insbesondere für einen Skisack, auszugestalten.

In den Zeichnungen sind bevorzugte Ausführungsbeispiele entsprechend der Erfindung näher dargestellt, es zeigen
Fig. 1-3 unterschiedliche Ausführungsformen einer Transportbehälter-Einrichtung, hier im Zusammenhang mit einer Skisack-Kassette,
Fig. 4-8 die Einbauhandhabung anhand der in Fig. 1 gezeigten Ausführungsform,
Fig. 9 ein vergrößertes Detail aus Fig. 8,
Fig. 10 wesentliche Bauteile einer anderen Ausführungsform einer Transportbehälter-Einrichtung in auseinandergezogener räumlicher Darstellung, vom Fondsitzraum her gesehen,
Fig. 11 die Anordnung gemäß Fig. 10 unter Einbeziehung eines Einbaurahmens ebenfalls in auseinandergezogener räumlicher Darstellung, jedoch in umgekehrter Blickrichtung vom Gepäck- bzw. Kofferraum her gesehen,
Fig. 12. einen Vertikalschnitt durch die Anordnung gemäß Fig. 11 nach deren Montage im fahrzeugseitigen Einbaufeld und
Fig. 13. ein vergrößertes Detail etwa entsprechend der mit XIII. bezeichneten Einkreisung in Fig. 12.

Unabhängig von der jeweiligen spezifischen Ausgestaltung einer Ausführungsform ist jede Transportbehälter-Einrichtung in den Zeichnungen durchgehend mit der Bezugsziffer 10 versehen.

Anhand einer teilweise im Längsschnitt dargestellten Fondsitzlehne 11 mit Kopfstütze 12 und heraufschwenkbarer (Schwenkpfeil v) und herabschwenkbarer (Schwenkpfeil u) Armlehne 13 ist vorstellbar, dass die Fondsitzlehne 11 einen Gepäck- bzw. Kofferraum K von einem Fondsitzraum F trennt.

In der Fondsitzlehne 11 ist, etwa sitzmittig mit der Armlehne 13 ausgerichtet, ein Halterahmen H befestigt. Der Halterahmen H stellt ein in der Fondsitzlehne 11 befestigtes separates ein- oder mehrteiliges Bauteil dar, welches aus zweckmäßigen Werkstoffen, wie z.B. aus einem geeigneten Kunststoff als Spritzgussteil oder auch aus Metall als Guß- oder Blechformteil hergestellt werden kann. Auch ist es möglich, dass die Struktur der Fondsitzlehne 11 selbst den Halterahmen H bildet.

Der Halterahmen H begrenzt einen Durchladekanal D, welcher den Kofferraum K und den Fondsitzraum F miteinander verbindet.

Der Halterahmen H bildet an der Seite des Kofferraums K eine Durchladeöffnung 14 und an der Seite des Fondraums F eine Einbauöffnung 15.

Der Halterahmen H stellt ein Bauteil etwa rechteckförmiger Grundform mit einem unteren Halterahmen-Querschenkel 16, einem oberen Halterahmen-Querschenkel 17 sowie mit zwei im seitlichen Parallelabstand voneinander angeordneten Hatterahmen-Hauptschenkeln 18 dar.

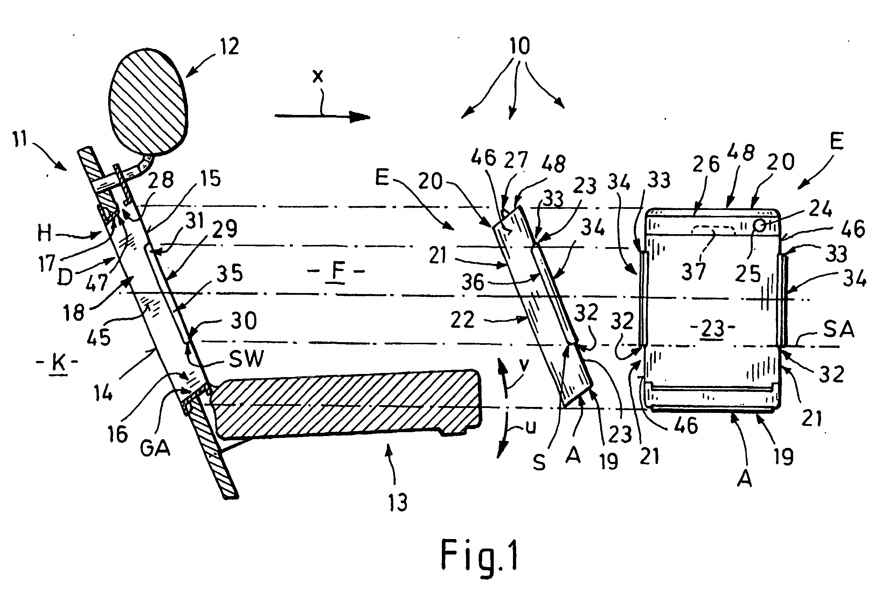

Der Durchladekanal D des Halterahmens H dient der lösbaren Befestigungsaufnahme eines Einbaurahmens E, welcher in den Fig. 1-3 sowohl in der Seitenansicht als auch in der breitflächigen Ansicht vom Fondsitzraum her dargestellt ist.

Der Einbaurahmen E weist einen unteren Einbaurahmen-Querschenkel 19, einen davon nach oben hin im Parallelabstand distanzierten oberen Einbaurahmen-Querschenkel 20 sowie zwei seitlich im Parallelabstand voneinander angeordnete Einbaurahmen-Hauptschenkel 21 auf.

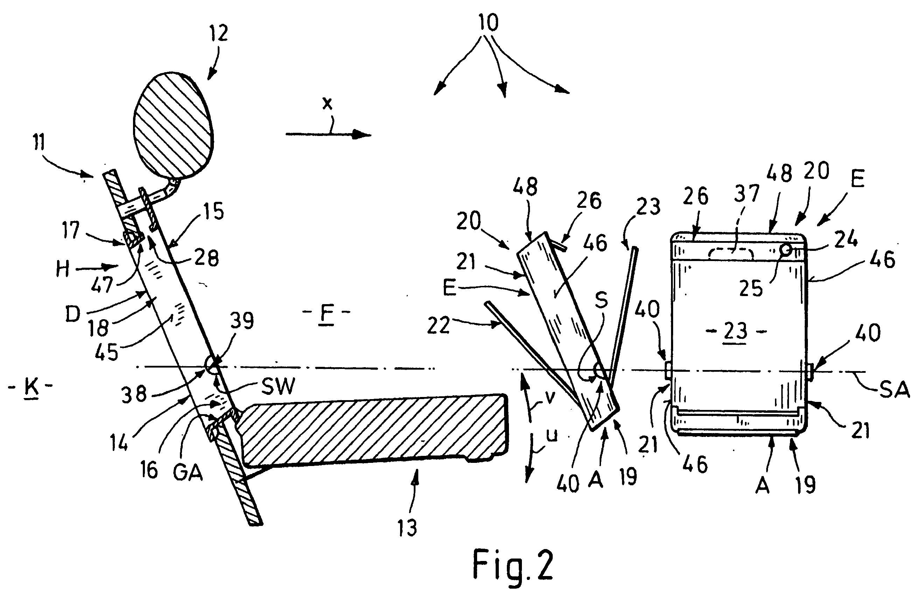

Der Einbaurahmen E bildet bei der gezeigten Ausführungsform eine Skisack-Kassette, welche (s. a. Fig. 2) ein rückwärtigen Gehäusedeckel 22 und einen vorderen Gehäusedeckel 23 aufweist. Beide Gehäusedeckel 22, 23 sind mittels einer eine Doppelfunktion ermöglichenden Betätigungstaste 24 aus ihrer Verriegelungslage lösbar, so dass bei aufgeklappten Deckeln 22, 23 in nicht dargestellter Weise ein Ausbreiten des nicht gezeigten Skisacks nach vom in den Fondsitzraum F hinein und danach ein Beladen des Skisacks mit Skier vom Kofferraum K her erfolgen kann.

Die Betätigungstaste 24 ist durch eine Durchgriffaussparung 25 hindurch einer die Betätigungstaste 24 überlagernden Betätigungszuglasche 26 zu bedienen. Durch einen Zug von Hand an der Betätigungszuglasche 26 (vgl. Fig. 2 mittlere Darstellung) wird eine Riegelleiste 27 in den oberen Einbaurahmen-Querholm 20 eingefahren.

Bei der Riegelleiste 27 handelt es sich um einen an sich bekannten Schnappriegel, welcher für den verriegelnden Eingriff in eine Riegelaussparung 28 bestimmt ist, die innen am oberen Halterahmen-Querschenkel 17 angeordnet ist.

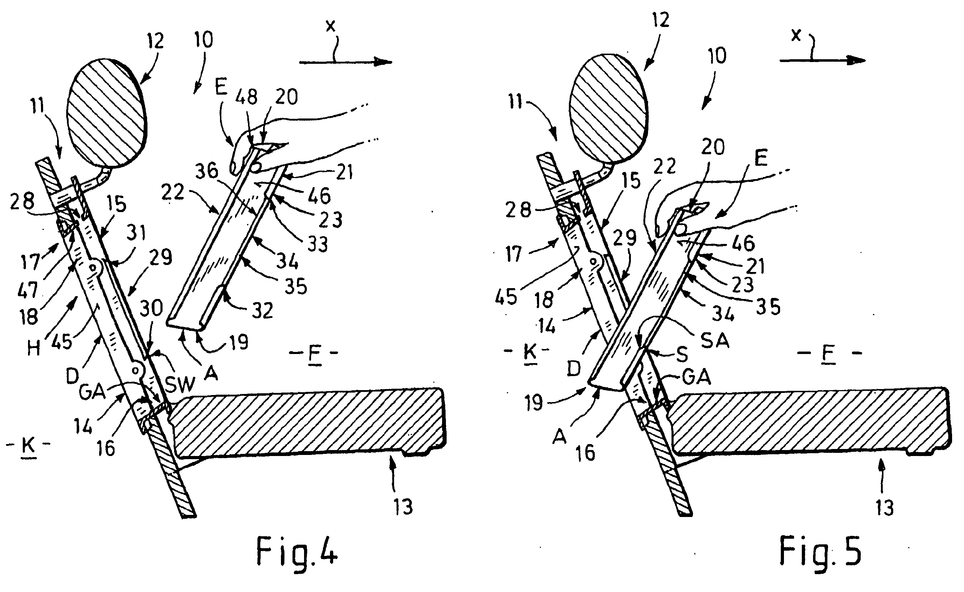

Aus den Fig. 1 sowie aus den Fig. 4-9 ist jeweils eine Lageraussparung 29 ersichtlich, welche einen langrechteckigen, endseitig durch schmale Abschlussflächen 30, 31 begrenzten Kehlnutbereich bildet, in welchen ein korrespondierende Abschluß-Gegenflächen 32, 33 aufweisender leistenartiger Lagervorsprung 34 des Einbaurahmens E eingreifen kann.

Der leistenartige Lagervorsprung 34 weist ebenfalls eine langrechteckige Kontur auf. Der langrechteckige Kehlnutgrund 35 der Lageraussparung 29 ist der Einbauöffnung 15, welche in einer Ebene angeordnet ist, zugewandt.

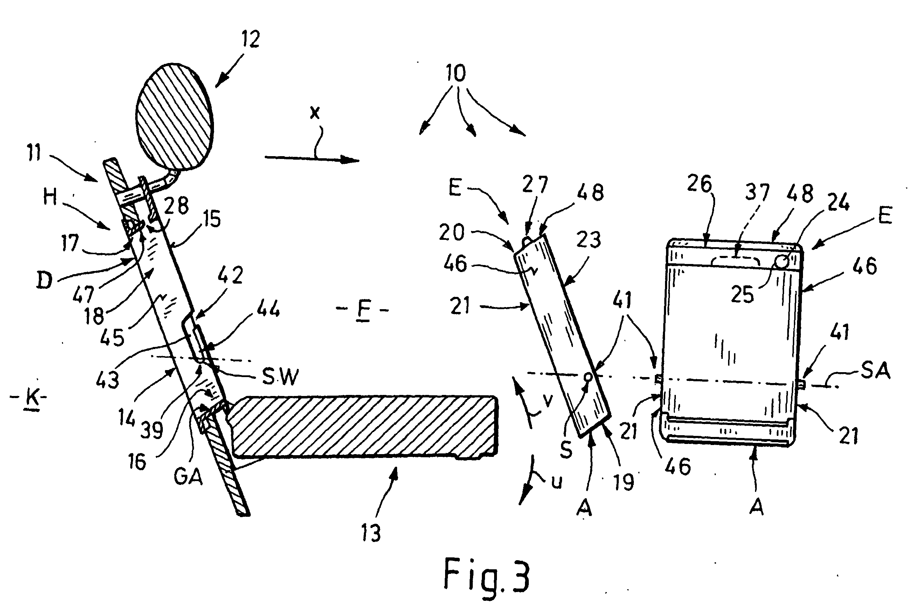

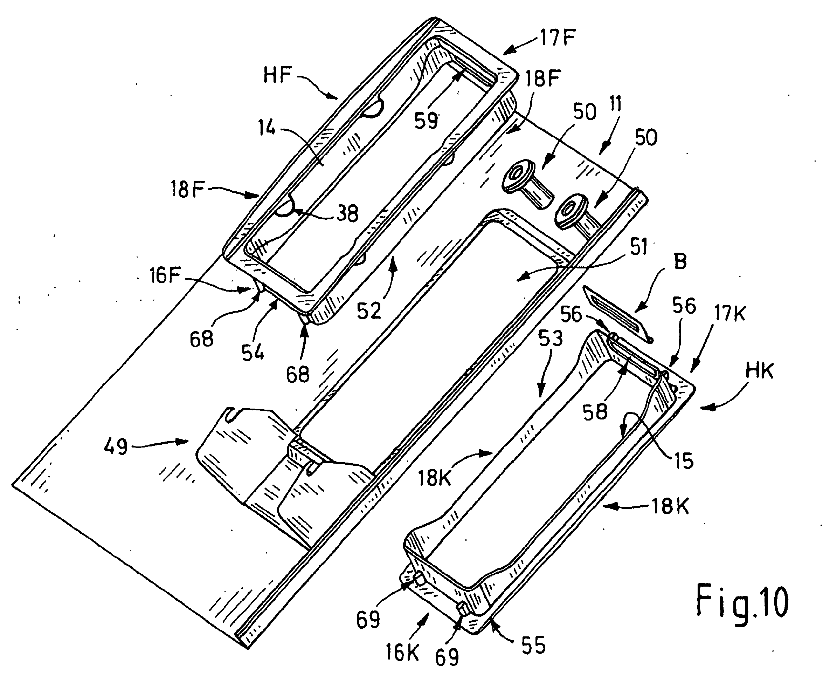

Die funktionelle Einbauhandhabung des Einbaurahmens E wird nun für das Ausführungsbeispiel gemäß Fig. 1 an Hand der Fig. 4-9 im einzelnen beschrieben. Diese Beschreibung gilt zugleich grundsätzlich für die in den Fig. 2 und 3 sowie ebenfalls für die in den Fig. 10-13 gezeigten Ausführungsformen.

Die Lagervorsprünge 34 ragen aus den seitlichen Außenflächen 46 von beiden Einbaurahmen-Hauptschenkeln 21 jeweils seitlich nach außen vor. Dazu korrelierend, sind die an den Innenflächen 45 der Halterahmen-Hauptschenkel 18 angeordneten beiden kehlnutartigen Lageraussparungen 29 zur Mitte des Halterahmens H sowie zur Einbauöffnung 15 hin offen.

Der Einbaurahmen E wird oben mit der Hand ergriffen, mit seinem unteren Bereich von der Einbauöffnung 15 her in den Durchladekanal D so weit eingeführt, bis jeweils die von der Kante zwischen der unteren Abschluß-Gegenfläche 32 und der langrechteckförmigen Leistenfläche 36 gebildete Schwenklagerstelle S der eimbaurahmenseitigen Lagervorsprünge 34 auf den beiden Schwenkwiderlagerstellen SW unten in den Lageraussparungen 29 aufsitzen.

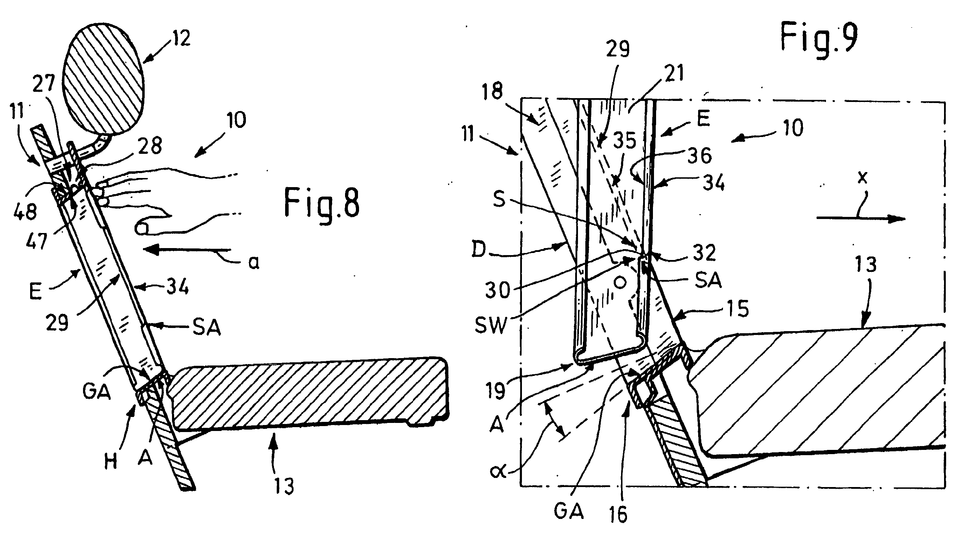

Die Schwenkwiderlagerstellen SW werden jeweils an den unteren Kanten zwischen dem langrechteckigen Kehlnutgrund 35 und der schmalen Abschlussfläche 30 der Lageraussparung 29 gebildet (Fig. 4 und 9). Die auf diese Weise zwischen den Schwenklagerstellen S und den Schwenkwiderlagerstellen SW gebildete Schwenkachse ist u.a. in den Fig. 1-3 jeweils rechts in der Darstellung des Einbaurahmens E mit SA bezeichnet.

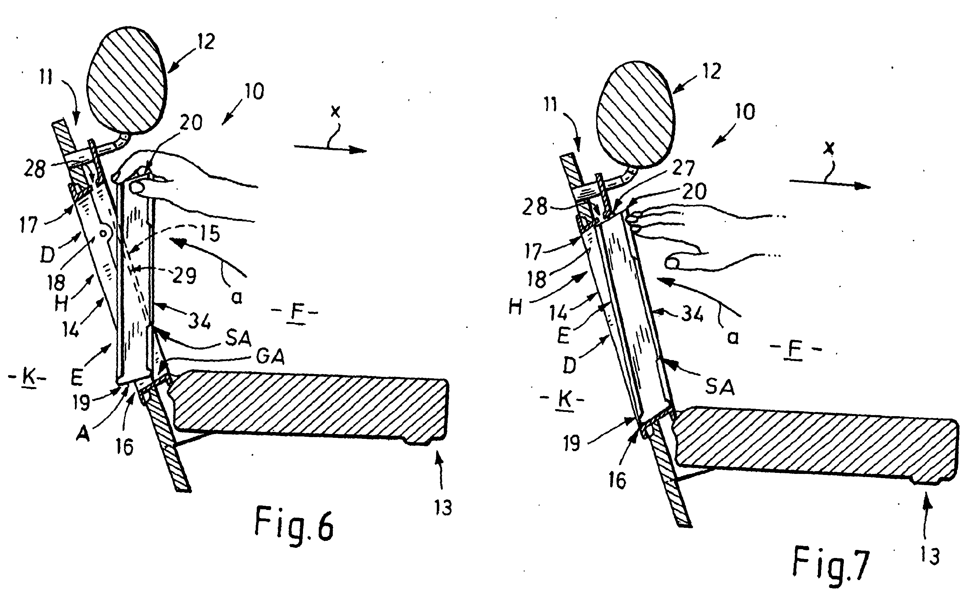

Um die Schwenkachse SA wird der Einbaurahmen E entsprechend den Darstellungen der Fig. 6-8 so weit entsprechend dem Pfeil a weitergeschwenkt, bis die von der unteren Außenfläche des unteren Einbaurahmen-Querschenkels 19 gebildete Anschlagfläche A flächig an der Gegenanschlagfläche GA des Halterahmens H anliegt. Die Gegenanschlagfläche GA wird von der Innenfläche des unteren Halterahmen-Querschenkels 16 gebildet.

Die Gegenanschlagfläche GA divergiert im Anschluß an die Einbauöffnung 15 von der Mitte des Halterahmens H weg mit einem Winkel ∝ nach außen. Dieser Neigung ist die Neigung der Anschlagfläche A des Einbaurahmens E angepasst. Der eingebaute Einbaurahmen E erhält so einen sicheren Halt, wenn Kräfte in Fahrtrichtung x auf ihn einwirken.

Gemäß Fig. 8 ist somit die Einbausituation des Einbaurahmens E erzielt, welche durch die Riegelleiste 27 am oberen Einbaurahmen-Querschenkel 20 lösbar arretiert ist, die in die Riegelaussparung 28 am oberen Halterahmen-Querschenkel 17 eingeschnappt ist. Die Schwenkachse SA befindet sich etwa im unteren Drittel der zusammengefügten Anordnung H/E.

Der von der Gegenanschlagfäche GA distanzierte Halterahmen-Querschenkel 17 bildet einen flächigen Sperr-Gegenanschlag 47, an welchem der montierte Einbaurahmen E, seine Verschiebung etwa parallel zur Einbauöffnung 15 verhindernd, mit einem Sperranschlag 48 anliegt. Die Flächen 47 und 48 verlaufen etwa parallel zu den Flächen GA und A, so dass im oberen Bereich der Anordnung ein Einschwenken des Einbaurahmens E behinderungsfrei erfolgen kann.

Durch Hintergreifen der gestrichelt eingezeichneten Handgriffaussparung 37 der Betätigungszuglasche 26 kann die Riegelleiste 27 wieder in den Einbaurahmen E eingefahren und letzterer sodann in einer dem Pfeil a entgegengesetzten Schwenkrichtung in einfacher Weise aus dem Durchladekanal D entnommen werden.

Die Ausführungsform entsprechend den Fig. 2 und 3 unterscheidet sich von der in den Fig. 1 sowie 4-9 gezeigten Ausführungsform lediglich durch eine andere Ausbildung der Lageraussparungen und der Lagervorsprünge.

Gemäß Fig. 2 sind die beiden Lageraussparungen 38 an den beiden Halterahmen-Hauptschenkeln 18 mittels einer der Einbauöffnung 15 zugewandten teilkreiszylindrischen Anlagefläche 39 etwa halbkreisförmig konturiert. Hierbei bilden die beiden Lagervorsprünge 40, welche seitlich von den Außenflächen 46 der beiden Einbaurahmen-Hauptschenkel 21 vorstehen, etwa korrespondierend zu den Lageraussparungen 38 jeweils einen eine Halbkreis-Querschnittsfläche aufweisenden Lagerzapfen.

Bei der Ausführungsform gemäß Fig. 3 weisen die beiden Lagervorsprünge 41 (Lagerzapfen) des Einbaurahmens E einen Vollkreis-Querschnitt auf. Die Lagerzapfen 41 sind dazu bestimmt, über je eine Einführöffnung 42 und über einen sich daran anschließenden Einführkanal 43 den ebenfalls mit einer teilkreisförmigen Anlagefläche 39 versehenen Lageraussparungen 44 zugeführt zu werden.

Die Fig. 10-13 zeigen, dass der Halterahmen H aus zwei Bauteilen besteht, nämlich aus einer zum Fondsitzraum F weisenden Halterahmenhälfte HF und aus einer zum Gepäck- bzw. Kofferraum weisenden Halterahmenhälfte HK.

Die Halterahmen-Querschenkel des Halterahmens H sind mit 16 und 17 sowie Halterahmen-Hauptschenkel des Halterahmens H mit 18 bezeichnet. Dazu analog sind die unteren Halterahmen-Querschenkel der beiden Halterahmenhälften HF, HK mit 16F, 16K, die oberen Halterahmen-Querschenkel mit 17F, 17K und die im Parallelabstand voneinander angeordneten Halterahmen-Hauptschenkel mit 18F und 18K bezeichnet.

Die Fondsitzlehne 11 ist in den Fig. 10-13 als Abschnitt einer Sitzlehnenstruktur dargestellt, welche an ihrer dem Fondsitzraum F zugewandten Seite eine Konsole 49 zur Aufnahme der Armlehne 13 und Steckhülsen 50 zur Halterung der Tragstangen der Kopfstütze 12 aufweist. Der Durchbruch 51 in der Struktur der der Fondsitzlehne 11 dient der Aufnahme des aus den beiden Halterahmenhälften HF, HK zusammengefügten Halterahmens H.

Die Halterahmenhälften HF, HK bilden zweckmäßig Gussteile aus Metall oder aus Kunststoff, im vorliegenden Fall Kunststoffspritzgussteile.

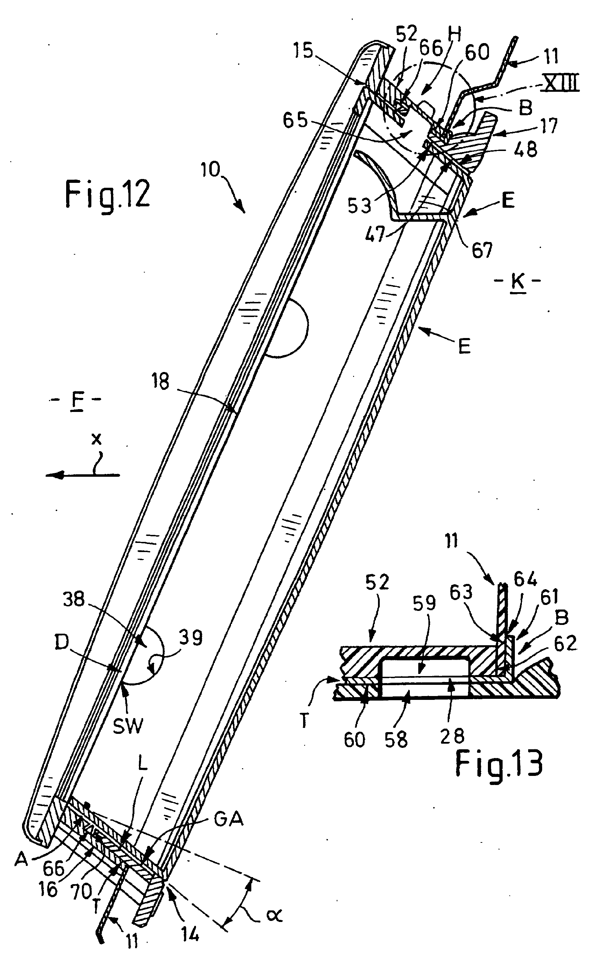

Jede Halterahmenhälfte HF, HK weist einen Hülsenbereich 52, 53 und einen Flanschbereich 54, 55 auf. Der Hülsenbereich 52 der fondseitigen Halterahmenhälfte HF besitzt eine größere lichte Weite als der Hülsenbereich HK der gepäck- bzw. kofferraumseitigen Halterahmenhälfte HK Fig. 12 zeigt, dass die beiden Halterahmenhälften HF, HK teleskopierend ineinandergreifen, wobei demnach die Halterahmenhälfte HF den weiteren äußeren Hülsenbereich 52 und die Halterahmenhälfte HK den engeren inneren Hülsenbereich 53 bildet.

Die beiden. Halterahmenhälften HF, HK sind formschlüssig aneinander befestigt. Hierzu sind dem oberen Halterahmen-Querschenkel 17K zwei aus dem Hülsenbereich nach außen vorragende Steckzapfen 56 angeformt, welche mit Stecköffnungen (Steckdurchbrüchen) 57 zusammenwirken, die am Hülsenbereich 52 des oberen Halterahmen-Querschenkels 17F vorgesehen sind.

Die unteren Bereiche der Halterahmenhälften HF, HK weisen zu ihrer Befestigung sogenannte Schraubdome 68, 69 zur Aufnahme von nicht dargestellten Befestigungsschrauben, wie z.B. von Gewindeschneidschrauben, auf.

Der obere Halterahmen-Querschenkel 17K der Halterahmenhälfte HK weist im Hülsenbereich 53 eine etwa langrechteckig konturierte Durchgriffsöffnung 58 auf. Der Durchgriffsöffnung 58 entspricht eine innenseitig des Hülsenbereichs 52 am oberen Halterahmen-Querschenkel 17F eingelassene ebenfalls langrechteckig konturierte Aussparung 59.

Die Durchgriffsöffnung 58 und die Aussparung 59 sind für den Durchgriff bzw. für den Eingriff der in den Fig. 10-13 nicht gezeigten Riegelleiste 27 (vgl. Fig. 1-3) bestimmt.

Als mit der Riegelleiste 27 unmittelbar zusammenwirkende Riegelaussparung 28 dient indessen ein Durchbruch in einem schließblechartigen Bauteil B aus Stahlblech. Die Riegelaussparung 28 des schließblechartigen Bauteils B besitzt eine etwa rechteckige langgestreckte Grundform mit gerundeten schmalseitigen Endbereichen. Die Riegelaussparung 28 des schließblechartigen Bauteils B ist mit der Durchgriffsöffnung 58 des Hülsenbereichs 53 der Halterahmenhälfte HK und mit der Aussparung 59 des Hülsenbereichs 52 der Halterahmenhälfte HF ausgerichtet.

Das schließblechartige Bauteil B besitzt einen etwa L-förmigen Querschnitt. Das Bauteil B besteht aus einem die Riegelaussparung 28 aufweisenden Riegelschenkel 60 und aus einem sich dazu etwa rechtwinklig erstreckenden Stützschenkel 61. Aus den Fig. 12 und 13 ist zu ersehen, dass der Riegelschenkel 60 des schließblechartigen Bauteils B in der Teleskopfuge T zwischen dem äußeren Hülsenbereich 52 der Halterahmenhälfte HF und dem inneren Hülsenbereich 53 der Halterahmenhälfte HK angeordnet ist.

Anhand der Fig. 10-13 ist auch vorstellbar, dass das schließblechartige Bauteil B im Wege der Einlegemontage anzubringen ist und dass die schmalseitigen Endbereiche der Riegelaussparung 28 von den beiden Steckzapfen 56 des inneren Hülsenbereichs 53 durchgriffen und dadurch lagegesichert sind.

Im Zusammenhang der Fig. 12 und 13 wird auch deutlich, dass ein Strukturbereich der Fondsitzlehne 11 zwischen der Stimfläche 62 des Hülsenbereichs 52 der fondseitigen Halterahmenhälfte HF und der eine Lastaufnahmefläche 63 bildenden inneren Fläche des Stützschenkels 61 des schließblechartigen Bauteils B angeordnet ist. Die an der Lastaufnahmefläche 63 anliegende Widerlagerfläche der Sitzlehne 11 ist mit 64 bezeichnet.

Wenn also z.B. im Falle eines Crash, der Halterahmen H in Fahrtrichtung x belastet wird, stützt sich der Halterahmen H mittels des Stützschenkels 61 sicher an der Sitzlehnenstruktur 11 ab. Außerdem werden die im Falle eines Crash von der Riegelleiste 27 übertragenen Kräfte über die Riegelaussparung 28 des Bauteils B ebenfalls mittels des Stützschenkels 61 zur Sitzlehnenstruktur 11 hin abgeleitet.

Dabei ist auch vorstellbar, dass das schließblechartige Bauteil B plastisch verformbare Energieaufnahmezonen aufweist, welche eine Crashbelastung der Transportbehälter-Einrichtung 10 und der Fahrzeugstruktur 11 verhindern oder mildem.

Die gezeigte Anordnung lässt es ebenfalls zu, in deren unterem Bereich ein ähnliches Blechbauteil (nicht dargestellt) mit L-förmigem Querschnitt zur zusätzlichen Abstützung des Halterahmens H an der Struktur 11 vorzusehen.

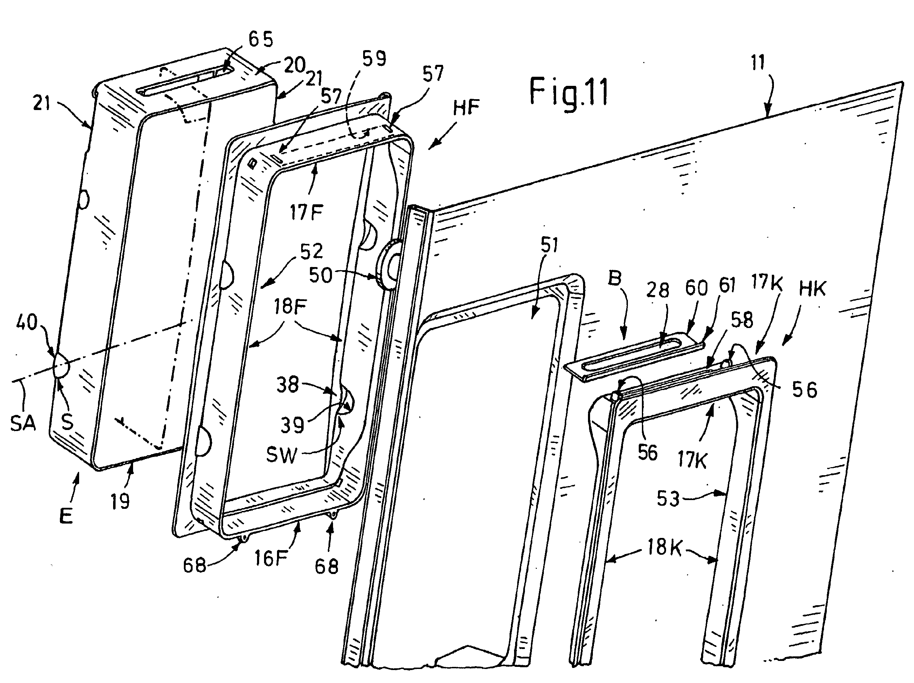

In Fig. 11 ist der Einbaurahmen E, im vorliegenden Fall eine Skisack-Kassette eingezeichnet. Der Querschnitt des Einbaurahmens E ist als dicke durchgezogene schwarze Kontur kenntlich gemacht (vgl. ebenfalls Fig. 12). Der Einbaurahmen E ist an seiner Oberseite mit einer Durchgriffsöffnung 65 versehen, welche eine etwa langrechteckige Kontur aufweist und welche der Aufnahme und Führung der in den Fig. 11-13 nicht dargestellten Riegelleiste 27 (vgl. Fig. 1 und 3) dient.

Die Lageraussparungen 38 des Halterahmens H und die Lagervorsprünge 40 des Einbaurahmens E entsprechen dem Ausführungsbeispiel gemäß Fig. 2.

Aus Fig. 12 ist weiterhin zu ersehen, dass an der dem Einbaurahmen E zugewandten Laibung L des Halterahmens H eine die Außenwand des Einbaurahmens E umgreifende Dichtung 66 angeordnet ist. Die Dichtung 66 ist in einer zwischen den Hülsenbereichen 52, 53 gebildeten, über den gesamten Innenumfang des Halterahmens vorgesehenen Nut 70 angeordnet.

Der sich an die Durchgriffsöffnung 65 anschließende abgeteilte Innenraum 67 des Einbaurahmens E dient der Aufnahme der ebenfalls nicht gezeigten Betätigungsmechanik für die Riegelleiste 27.

## Patentansprüche

1. Transportbehälter-Einrichtung (10) für Fahrzeuge, wie z.B. Durchladeeinrichtung, insbesondere für den sitzlehnen- oder kofferraumwandseitigen Einbau in Personenkraftwagen, mit einem fahrzeugfesten Halterahmen (H), der mindestens teilweise einen Durchladekanal (D) begrenzt, in welchen ein Einbaurahmen (E) eines Transportbehälters, wie eines Skisacks od. dgl., durch eine Einbauöffnung (15) des Durchladekanals (D) hindurch, mit einer Schwenklagerstelle (S) lösbar an eine halterahmenseitige Schwenkwiderlagerstelle (SW) ansetzbar und um die so gebildete Schwenkachse (SA) herum in seine Einbauposition hinein schwenkbar ist, in welcher der Einbaurahmen (E) mit einem Anschlag (A) an einem halterahmenseitigen Gegenanschlag (GA) anliegt und in welcher der Einbaurahmen (E) mittels einer von der Schwenkachse (SA) distanzierten Riegelanordnung (27, 28) am Halterahmen (H) lösbar festzulegen ist, **dadurch gekennzeichnet, dass** sich die Schwenkachse (SA) quer zu zwei einander gegenüberliegenden Hauptschenkeln (18, 18; 21, 21) in einem Bereich zwischen zwei Querschenkeln (16, 17; 19, 20) jeweils sowohl des Halterahmens (H) als auch des Einbaurahmens (E) erstreckt, und wobei in der Einbausituation des Einbaurahmens (E) dessen Anschlag (A) von der Schwenkachse (SA) distanziert und der Einbauöffnung (15) zugewandt ist sowie an dem der Einbauöffnung (15) abgewandten Gegenanschlag (GA) des Halterahmens (H) anliegt.

2. Transportbehälter-Einrichtung nach Anspruch 1, **dadurch gekennzeichnet, dass** der Anschlag (A) des Einbaurahmens (E) an einem sich parallel zur Schwenkachse (SA) erstreckenden Einbaurahmen-Querschenkel (19) und dass, dazu analog, der Gegenanschlag (GA) des Halterahmens (H) an einem sich parallel zur Schwenkachse (SA) erstreckenden korrespondierenden Halterahmen-Querschenkel (16) angeordnet ist.

3. Transportbehälter-Einrichtung nach.Anspruch 1 oder nach Anspruch 2, **dadurch gekennzeichnet, dass** der Gegenanschlag (GA) des Halterahmens (H) von einer Innenfläche, der Gegenanschlagfläche (GA), des Halterahmen-Querschenkels (16) gebildet ist, welche im Anschluß an die Einbauöffnung (15) von der Mitte des Halterahmens (H) weg nach außen divergiert und dass der Anschlag (A) des Einbaurahmens (E) von einer Außenfläche eines Querschenkels (19), der Anschlagfläche (A), gebildet ist, welche in der Einbausituation des Einbaurahmens (E) flächig an der Gegenanschlagfläche (GA) anliegt.

4. Transportbehälter-Einrichtung nach einem der Ansprüche 1 bis 3, **dadurch gekennzeichnet, dass** die Schwenkachse (SA) jeweils in dem der Einbauöffnung (15) zugewandten Bereich der beiden Halterahmen-Hauptschenkel (18) und der beiden Einbaurahmen-Hauptschenkel (21) angeordnet ist.

5. Transportbehälter-Einrichtung nach Anspruch 4, **dadurch gekennzeichnet, dass** die von der Schwenkachse (SA) durchsetzten halterahmenseitigen Schwenkwiderlagerstellen (SW) und die dazu korrespondierenden einbaurahmenseitigen Schwenklagerstellen (S) von lösbar ineinandergreifenden Lageraussparungen (29, 38, 44) und/oder Lagervorsprüngen (34, 40, 41) gebildet sind.

6. Transportbehälter-Einrichtung nach Anspruch 5, **dadurch gekennzeichnet, dass** seitens des Halterahmens (H) jede Lageraussparung (29, 38, 44) auf ihrer der Einbauöffnung (15) abgewandten Seite und auf ihrer dem Gegenanschlag (GA) zugewandten Seite eine Anlagefläche (35, 35; 39; 39) für einen Lagervorsprung (34, 40, 41) des Einbaurahmens (E) bildet.

7. Transportbehälter-Einrichtung nach Anspruch 5, **dadurch gekennzeichnet, dass** seitens des Einbaurahmens (E) jede Lageraussparung auf ihrer der Einbauöffnung (15) zugewandten Seite und auf Ihrer dem Anschlag (A) zugewandten Seite eine Anschlagfläche für einen Lagervorsprung des Halterahmens (H) bildet.

8. Transportbehälter-Einrichtung nach einem der Ansprüche 5 bis 7, **dadurch gekennzeichnet, dass** die Lageraussparungen (29, 38, 44) und/oder die Lagervorsprünge (34, 40, 41) an den Innenflächen (45) der Halterahmen-Hauptschenkel (18) und an den Außenflächen (46) der Einbaurahmen-Hauptschenkel (21) angeordnet sind.

9. Transportbehälter-Einrichtung nach einem der Ansprüche 5 bis 8, **dadurch gekennzeichnet, dass** jede Lageraussparung (29) einen etwa langrechteckigen, endseitig durch schmale Abschlussflächen (30, 31) begrenzten Kehlnutbereich bildet, in welchen ein korrespondierende Abschluss-Gegenflächen (32, 33) aufweisender, leistenartiger Lagervorsprung (34) etwa langrechteckiger Kontur eingreift.

10. Transportbehälter-Einrichtung nach einem der Ansprüche 5 bis 8, **dadurch gekennzeichnet, dass** jede Lageraussparung (38, 44) etwa halbkreisförmig konturiert und dass der Lagervorsprung (40, 41), dazu etwa korrespondierend, einen eine Halbkreis- oder Vollkreisquerschnittsfläche aufweisenden Lagerzapfen bildet.

11. Transportbehälter-Einrichtung nach Anspruch 10, **dadurch gekennzeichnet, dass** jeder halbkreisförmig konturierten Lageraussparung (38, 44) ein mit einer Einführöffnung (42) versehener Einführkanal (43) für den Lagervorsprung (40, 41) vorgeordnet ist.

12. Transportbehälter-Einrichtung nach einem der Ansprüche 1 bis 11, **dadurch gekennzeichnet, dass** der vom Gegenanschlag (GA) distanzierte Halterahmen-Querschenkel (17) einen insbesondere flächigen Sperr-Gegenanschlag (47) bildet, an welchem in der Einbausituation des Einbaurahmens (E) ein insbesondere flächiger einbaurahmenseitiger Sperranschlag (48), eine Verschiebung des Einbaurahmens (E) etwa parallel zur Einbauöffnung (15) verhindernd, anliegt.

13. Transportbehälter-Einrichtung nach einem der Ansprüche 1 bis 12, **dadurch gekennzeichnet, dass** die Riegelanordnung (27, 28) gemeinsam dem vom Gegenanschlag (GA) distanzierten Halterahmen-Querschenkel (17) und dem vom Anschlag (A) distanzierten Einbaurahmen-Querschenkel (20) zugeordnet ist.

14. Transportbehälter-Einrichtung nach einem der Ansprüche 1 bis 13, **dadurch gekennzeichnet, dass** die Riegelanordnung (27, 28) von einem durch ein Betätigungselement, beispielsweise durch eine Handbetätigungstaste (24), betätigbaren beweglichen Riegelzapfen (27) und von einer mit dem Riegelzapfen (27) zusammenwirkenden Riegelaussparung (28) gebildet ist.

15. Transportbehälter-Einrichtung nach Anspruch 14, **dadurch gekennzeichnet, dass** der Riegelzapfen (27) leistenförmig und, dazu korrespondierend, die Riegelaussparung (28) als langrechteckige Verriegelungsnut, insbesondere mit etwa U-förmigem Nutquerschnitt, ausgebildet ist.

16. Transportbehälter-Einrichtung nach einem der Ansprüche 1 bis 15, **dadurch gekennzeichnet, dass** die beweglichen Teile (27, 24) der Riegelanordnung (27, 24; 28) dem Einbaurahmen (E) und deren unbewegliche Teile (28) dem Halterahmen (H) zugeordnet sind.

17. Transportbehälter-Einrichtung nach einem der Ansprüche 14 bis 16, **dadurch gekennzeichnet, dass** der Riegelzapfen (27) und gegebenenfalls dessen Betätigungselement (24) dem Einbaurahmen (E) und dass die Riegelaussparung (28) dem Halterahmen (H) zugeordnet ist.

18. Transportbehälter-Einrichtung nach einem der Ansprüche 1 bis 17, **dadurch gekennzeichnet, dass** der Halterahmen (H) ein den Durchladekanal (D) bildendes, fahrzeugseitig gehaltenes, ein- oder mehrteiliges Einbauteil bildet.

19. Transportbehälter-Einrichtung nach Anspruch 18, **dadurch gekennzeichnet, dass** der Halterahmen (H) aus zwei formschlüssig ineinandergreifende Halterahmenhälften (HF, HK) aufweist.

20. Transportbehälter-Einrichtung nach Anspruch 19, **dadurch gekennzeichnet, dass** jeder Halterahmenhälfte (HF, HK) einen Hülsenbereich (52, 53) und je einen am Ende des Hülsenbereichs (52, 53) angeordneten Flanschbereich (54, 55) aufweist, wobei beide Flanschbereiche (54, 55) voneinander wegweisen.

21. Transportbehälter-Einrichtung nach Anspruch 20, **dadurch gekennzeichnet, dass** die Hülsenbereiche (52, 53) der beiden Halterahmenhälften (HF, HK) teleskopierend ineinandergreifen.

22. Transportbehälter-Einrichtung nach einem der Ansprüche 19 bis 21, **dadurch gekennzeichnet, dass** die beiden Halterahmenhälften (HF, HK) formschlüssig aneinander befestigt sind.

23. Transportbehälter-Einrichtung nach Anspruch 22, **dadurch gekennzeichnet, dass** die beiden Halterahmenhälften (HF, HK) an einem Befestigungsbereich miteinander steckbefestigt sind, während an einem gegenüberliegenden Befestigungsbereich eine Schraubverbindung (68, 69) vorhanden ist.

24. Transportbehälter-Einrichtung nach einem der Ansprüche 19 bis 23, **dadurch gekennzeichnet, dass** der Hülsenbereich (53) der einen Halterahmenhälfte (HK) mit etwa parallel zur Ebene des benachbarten Flanschbereichs (55) vorragenden Steckzapfen (56) versehen ist, während der Hülsenbereich (52) der anderen Halterahmenhälfte (HF) mindestens eine mit den Steckzapfen (56) zusammenwirkende Stecköffnung (57) aufweist.

25. Transportbehälter-Einrichtung nach einem der Ansprüche 14 bis 24, **dadurch gekennzeichnet, dass** die mindestens eine Riegelaussparung (28) für den mindestens einen beweglichen Riegelzapfen (27) von einem mittels der beiden Halterahmenhälften (HF, HK) gehaltenen schließblechartigen Bauteil (B) gebildet ist.

26. Transportbehälter Einrichtung nach Anspruch 25, **dadurch gekennzeichnet, dass** das schließblechartige Bauteil (B) in der Teleskopfuge (T) zwischen den Hülsenbereichen (52, 53) der beiden Halterahmenhälften (HF, HK) gehalten ist.

27. Transportbehälter-Einrichtung nach einem der Ansprüche 22 bis 26, **dadurch gekennzeichnet, dass** das schließblechartige Bauteil (B) in die Teleskopfuge (T) zwischen den Hülsenbereichen (52, 53) der beiden Halterahmenhälften (HF, HK) eingelegt ist und mindestens eine Befestigungsaussparung (28) aufweist, welche von dem oder den Steckzapfen (56) des Hülsenbereichs (53) einer Halterahmenhälfte (HK) durchgriffen ist.

28. Transportbehälter-Einrichtung nach Anspruch 27, **dadurch gekennzeichnet, dass** die Riegelaussparung (28) zugleich die Befestigungsaussparung bildet.

29. Transportbehälter-Einrichtung nach Anspruch 28, **dadurch gekennzeichnet, dass** die Riegelaussparung (28) des schließblechartigen Bauteils (B) eine etwa rechteckige langgestreckte Grundform mit gerundeten schmalseitigen Endbereichen aufweist, und dass die Riegelaussparung (28) an jedem schmalseitigen Endbereich von einem Steckzapfen (56) durchgriffen ist.

30. Transportbehälter-Einrichtung nach einem der Ansprüche 1 bis 29, **dadurch gekennzeichnet, dass** dem Halterahmen (H) ein Halteelement (61) mit einer Lastaufnahmefläche (63) zugeordnet ist, welche in die Hauptbelastungsrichtung der Anordnung, insbesondere in Fahrtrichtung (x), weist und welche an einer fahrzeugseitigen Widerlagerfläche (64) anliegt.

31. Transportbehälter-Einrichtung nach einem der Ansprüche 25 bis 30, **dadurch gekennzeichnet, dass** das schließblechartige Bauteil (B) einen etwa L-förmigen Querschnitt mit einem die Riegelaussparung (28) aufweisenden Riegelschenkel (60) und mit einem sich dazu etwa rechtwinklig erstreckenden Stützschenkel (61) aufweist.

32. Transportbehälter-Einrichtung nach Anspruch 30 oder nach Anspruch 31, **dadurch gekennzeichnet, dass** der Stützschenkel (61) das Halteelement mit der Lastaufnahmefläche (63) bildet.

33. Transportbehälter-Einrichtung nach Anspruch 32, **dadurch gekennzeichnet, dass** die Lastaufnahmefläche (63) an der inneren Fläche des Stützschenkels (61) des schließblechartigen Bauteils (B) angeordnet ist.

34. Transportbehälter-Einrichtung nach einem der Ansprüche 19 bis 33, **dadurch gekennzeichnet, dass** der Hülsenbereich (52) der fondseitigen Halterahmenhälfte (HF) eine größere Weite aufweist als der Hülsenbereich (53) der gepäck- bzw. kofferraumseitigen Halterahmenhälfte (HK).

35. Transportbehälter-Einrichtung nach Anspruch 34, **dadurch gekennzeichnet, dass** der Riegelschenkel (60) des schließblechartigen Bauteils (B) in der Teleskopfuge (T) zwischen dem äußeren Hülsenbereich (52) der fondseitigen Halterahmenhälfte (HF) und dem inneren Hülsenbereich (53) der gepäck- bzw. kofferraumseitigen Halterahmenhälfte (HK) angeordnet ist.

36. Transportbehälter-Einrichtung nach Anspruch 35, **dadurch gekennzeichnet, dass** ein die fahrzeugseitige Widerlagerfläche (64) bildendes Bauteil (11) zwischen der Stirnfläche (62) des Hülsenbereichs (52) der fondseitigen Halterahmenhälfte (HF) und der die Lastaufnahmefläche (63) bildenden inneren Fläche des Stützschenkels (61) des schließblechartigen Bauteils (B) angeordnet ist.

37. Transportbehälter-Einrichtung nach einem der Ansprüche 1 bis 36, **dadurch gekennzeichnet dass** an der dem Einbaurahmen (E) zugewandten Laibung (L) des Halterahmens (H) eine die Außenwand des Einbaurahmens (E) umgreifende Dichtung (66) angeordnet ist.

38. Transportbehälter-Einrichtung nach einem der Ansprüche 26 bis 37, **dadurch gekennzeichnet, dass** zwischen den beiden Hülsenbereichen (52, 53) der beiden Halterahmenhälften (HF, HK) und im übrigen benachbart dem schließblechartigen Bauteil (B) entlang der Laibung (L) des Halterahmens (H) eine Aufnahmenut (70) für die Dichtung (66) gebildet ist.

39. Transportbehälter-Einrichtung nach einem der Ansprüche 25 bis 38, d**adurch gekennzeichnet,** dass das schließblechartige Bauteil B mindestens eine bei Crashbelastung plastisch verformbare Energieaufnahmezone bildet.

## Claims

1. Transport container device (10) for vehicles, such as, for example, through-load device, in particular for installation in the seat backrest or boot wall in passenger cars, having a holding frame (H) which is fixed to the vehicle and at least partly bounds a through-load passage (D), into which an installation frame (E) of a transport container, such as a ski bag or the like, can be releasably placed through an installation opening (15) of the through-load passage (D) by a pivot bearing point (S) onto a holding-frame-side pivot abutment point (SW) and pivoted about the pivot axis (SA) thus formed into its installation position, in which the installation frame (E) bears by a stop (A) against a holding-frame-side mating stop (GA) and in which the installation frame (E) is to be releasably secured to the holding frame (H) by means of a latching arrangement (27, 28) at a distance from the pivot axis (SA), **characterised in that** the pivot axis (SA) extends transversely to two mutually opposite main members (18, 18; 21, 21) in a region between two transverse members (16, 17; 19, 20) both of the holding frame (H) and of the installation frame (E) respectively, and **in that** in the installation situation of the installation frame (E) its stop (A) is at a distance from the pivot axis (SA) and directed towards the installation opening (15), and bears against the mating stop (GA), directed away from the installation opening (15), of the holding frame (H).

2. Transport container device according to Claim 1, **characterised in that** the stop (A) of the installation frame (E) is arranged on an installation-frame transverse member (19) extending parallel to the pivot axis (SA), and **in that**, analogously thereto, the mating stop (GA) of the holding frame (H) is arranged on a corresponding holding-frame transverse member (16) extending parallel to the pivot axis (SA) .

3. Transport container device according to Claim 1 or according to Claim 2, **characterised in that** the mating stop (GA) of the holding frame (H) is formed by an inner surface, the mating stop surface (GA), of the holding-frame transverse member (16), which surface, following the installation opening (15), diverges outwards away from the centre of the holding frame (H), and **in that** the stop (A) of the installation frame (E) is formed by an outer surface of a transverse member (19), the stop surface (A), which in the installation situation of the installation frame (E) bears flat against the mating stop surface (GA).

4. Transport container device according to one of Claims 1 to 3, **characterised in that** the pivot axis (SA) is arranged in each case in the region, directed towards the installation opening (15), of the two holding-frame main members (18) and of the two installation-frame main members (21).

5. Transport container device according to Claim 4, **characterised in that** the holding-frame-side pivot abutment points (SW) through which the pivot axis (SA) passes, and the installation-frame-side pivot bearing points (S) corresponding thereto are formed by releasably interengaging bearing recesses (29, 38, 44) and/or bearing projections (34, 40, 41).

6. Transport container device according to Claim 5, **characterised in that**, on the part of the holding frame (H), each bearing recess (29, 38, 44) forms on its side directed away from the installation opening (15) and on its side directed towards the mating stop (GA) a bearing surface (35, 35; 39; 39) for a bearing projection (34, 40, 41) of the installation frame (E).

7. Transport container device according to Claim 5, **characterised in that**, on the part of the installation frame (E), each bearing recess has on its side directed towards the installation opening (15) and on its side directed towards the stop (A) a stop surface for a bearing projection of the holding frame (H).

8. Transport container device according to one of Claims 5 to 7, **characterised in that** the bearing recesses (29, 38, 44) and/or the bearing projections (34, 40, 41) are arranged on the inner surfaces (45) of the holding-frame main members (18) and on the outer surfaces (46) of the installation-frame main members (21).

9. Transport container device according to one of Claims 5 to 8, **characterised in that** each bearing recess (29) forms an approximately elongated-rectangular groove region which is bounded at the ends by narrow terminating surfaces (30, 31) and in which a strip-like bearing projection (34) with an approximately elongated-rectangular contour and having corresponding mating terminating surface (32, 33) engages.

10. Transport container device according to one of Claims 5 to 8, **characterised in that** each bearing recess (38, 44) is formed with an approximately semicircular contour, and **in that** the bearing projection (40, 41) forms, in a manner approximately corresponding thereto, a bearing journal having a semicircular or full-circular cross-sectional area.

11. Transport container device according to Claim 10, **characterised in that** each bearing recess (38, 44) formed with a semicircular contour is preceded by an introduction channel (42), provided with an introduction opening (42), for the bearing projection (40, 41).

12. Transport container device according to one of Claims 1 to 11, **characterised in that** the holding-frame transverse member (17) at a distance from the mating stop (GA) forms an in particular planar mating blocking stop (47), against which in the installation situation of the installation frame (E) an in particular planar installation-frame-side blocking stop (48) bears so as to prevent displacement of the installation frame (E) approximately parallel to the installation opening (15).

13. Transport container device according to one of Claims 1 to 12, **characterised in that** the latching arrangement (27, 28) is assigned jointly to the holding-frame transverse member (17) at a distance from the mating stop (GA) and to the installation-frame transverse member (20) at a distance from the stop (A).

14. Transport container device according to one of Claims 1 to 13, **characterised in that** the latching arrangement (27, 28) is formed by a movable latching pin (27) actuable by an actuating element, for example by a manual actuating button (24), and by a latching aperture (28) cooperating with the latching pin (27).

15. Transport container device according to Claim 14, **characterised in that** the latching pin (27) is designed in the form of a strip and, corresponding thereto, the latching aperture (28) is designed as an elongated-rectangular latching groove, in particular with an approximately U-shaped groove cross-section.

16. Transport container device according to one of Claims 1 to 15, **characterised in that** the movable parts (27, 24) of the latching arrangement (27, 24; 28) are assigned to the installation frame (E) and the non-movable parts (28) of the said arrangement are assigned to the holding frame (H).

17. Transport container device according to one of Claims 14 to 16, **characterised in that** the latching pin (27) and optionally its actuating element (24) is assigned to the installation frame (E), and **in that** the latching aperture (28) is assigned to the holding frame (H).

18. Transport container device according to one of Claims 1 to 17, **characterised in that** the holding frame (H) forms a single- or multi-part installation part which forms the through-load passage (D) and is held on the vehicle.

19. Transport container device according to Claim 18, **characterised in that** the holding frame (H) has two positively interengaging holding-frame halves (HF, HK).

20. Transport container device according to Claim 19, **characterised in that** each holding-frame half (HF, HK) has a sleeve region (52, 53) and in each case a flange region (54, 55) arranged at the end of the sleeve region (52, 53), the two flange regions (54, 55) facing away from one another.

21. Transport container device according to Claim 20, **characterised in that** the sleeve regions (52, 53) of the two holding-frame halves (HF, HK) engage telescopically in one another.

22. Transport container device according to one of Claims 19 to 21, **characterised in that** the two holding-frame halves (HF, HK) are positively fastened to one another.

23. Transport container device according to Claim 22, **characterised in that** the two holding-frame halves (HF, HK) are pluggably fastened to one another at one fastening region, while at an opposite fastening region a screw connection (68, 69) is present.

24. Transport container device according to one of Claims 19 to 23, **characterised in that** the sleeve region (53) of one holding-frame half (HK) is provided with insertion pins (56) projecting approximately parallel to the plane of the adjacent flange region (55), while the sleeve region (52) of the other holding-frame half (HF) has at least one insertion opening (57) cooperating with the insertion pins (56).

25. Transport container device according to one of Claims 14 to 24, **characterised in that** the at least one latching aperture (28) for the at least one movable latching pin (27) is formed by a striking-plate-like component (B) held by means of the two holding-frame halves (HF, HK).

26. Transport container device according to Claim 25, **characterised in that** the striking-plate-like component (B) is held in the telescopic joint (T) between the sleeve regions (52, 53) of the two holding-frame halves (HF, HK).

27. Transport container device according to one of Claims 22 to 26, **characterised in that** the striking-plate-like component (B) is laid into the telescopic joint (T) between the sleeve regions (52, 53) of the two holding-frame halves (HF, HK) and has at least one fastening aperture (28) which is penetrated by the insertion pin(s) (56) of the sleeve region (53) of one holding-frame half (HK).

28. Transport container device according to Claim 27, **characterised in that** the latching aperture (28) simultaneously forms the fastening aperture.

29. Transport container device according to Claim 28, **characterised in that** the latching aperture (28) of the striking-plate-like component (B) has an approximately rectangular elongated basic shape with rounded narrow-side end regions, and **in that** the latching aperture (28) is penetrated at each narrow-side end region by an insertion pin (56).

30. Transport container device according to one of Claims 1 to 29, **characterised in that** the holding frame (H) is assigned a holding element (61) having a load-bearing surface (63) which faces the main loading direction of the arrangement, in particular the direction of travel (x), and which bears against a vehicle-side abutment surface (64).

31. Transport container device according to one of Claims 25 to 30, **characterised in that** the striking-plate-like component (B) has an approximately L-shaped cross-section with a latching leg (60) having the latching aperture (28) and with a supporting leg (61) extending approximately at right angles thereto.

32. Transport container device according to Claim 30 or according to Claim 31, **characterised in that** the supporting leg (61) forms the holding element having the load-bearing surface (63).

33. Transport container device according to Claim 32, **characterised in that** the load-bearing surface (63) is arranged on the inner surface of the supporting leg (61) of the striking-plate-like component (B).

34. Transport container device according to one of Claims 19 to 33, **characterised in that** the sleeve region (52) of the rear-space-side holding-frame half (HF) has a greater width than the sleeve region (53) of the luggage-space- or boot-side holding-frame half (HK).

35. Transport container device according to Claim 34, **characterised in that** the latching leg (60) of the striking-plate-like component (B) is arranged in the telescopic joint (T) between the outer sleeve region (52) of the rear-space-side holding-frame half (HF) and the inner sleeve region (53) of the luggage-space- or boot-side holding-frame half (HK).

36. Transport container device according to Claim 35, **characterised in that** a component (11) forming the vehicle-side abutment surface (64) is arranged between the end surface (62) of the sleeve region (52) of the rear-space-side holding-frame half (HF) and the inner surface, forming the load-bearing surface (63), of the supporting leg (61) of the striking-plate-like component (B).

37. Transport container device according to one of Claims 1 to 36, **characterised in that** a seal (66) encompassing the outer wall of the installation frame (E) is arranged on the inner surface (L), directed towards the installation frame (E), of the holding frame (H).

38. Transport container device according to one of Claims 26 to 37, **characterised in that** a receiving groove (70) for the seal (66) is formed between the two sleeve regions (52, 53) of the two holding-frame halves (HF, HK) and furthermore adjacent to the striking-plate-like component (B) along the inner surface (L) of the holding frame (H).

39. Transport container device according to one of Claims 25 to 38, **characterised in that** the striking-plate-like component B forms at least one energy-absorbing zone which is plastically deformable in the event of crash loading.

## Revendications

1. Dispositif à conteneur de transport (10) pour véhicules, tel que, par exemple, dispositif à conteneur à évidement de chargement, en particulier pour le montage côté dossier ou côté paroi de coffre à bagages dans des voitures particulières, avec un cadre de maintien (H) fixé rigidement au véhicule, délimitant au moins partiellement un canal d'évidement de chargement (D), dans lequel un cadre de montage (E) d'un conteneur de transport, tel qu'un sac à ski ou analogue, est susceptible d'être placé à travers une ouverture de montage (15) du canal à évidement de chargement (D), avec un point de palier de pivotement (S), de façon désolidarisable, sur un point de palier de pivotement conjugué (SW) situé du côté du cadre de maintien, et est susceptible de pivoter autour de l'axe de pivotement (SA) ainsi formé, pour être passé à sa position montée, à laquelle le cadre de montage (E) appuie, par une butée (A), sur une butée conjuguée (GA) située côté cadre de maintien, et à laquelle le cadre de montage (E) est à fixer de façon désolidarisable sur le cadre de maintien (H), à l'aide d'un dispositif de verrouillage (27, 28) espacé de l'axe de pivotement (SA), **caractérisé en ce que** l'axe de pivotement (SA) s'étend transversalement par rapport à deux branches principales (18, 18 ; 21, 21), opposées l'une à l'autre dans une zone située entre deux branches transversales (16, 17 ; 19, 20), chaque fois tant du cadre de maintien (H), qu'également du cadre de montage (E) et, à la situation montée du cadre de maintien (E), sa butée (A) est espacée de l'axe de pivotement (SA) et tournée vers l'ouverture de montage (15), ainsi qu'en appui sur une butée conjuguée (GA), opposée à 1 ' ouverture de montage (15), du cadre de maintien (H).

2. Dispositif à conteneur de transport selon la revendication 1, **caractérisé en ce que** la butée (A) du cadre de montage (E) est disposée sur une branche transversale de cadre de maintien (19) s'étendant parallèlement à l'axe de pivotement (SA), et **en ce que**, de façon analogue à cela, la butée conjuguée (GA) du cadre de maintien (H) est disposée sur une branche transversale de cadre de maintien (16) correspondante, s'étendant parallèlement à l'axe de pivotement (SA).

3. Dispositif à conteneur de transport selon la revendication 1 ou selon la revendication 2, **caractérisé en ce que** la butée conjuguée (GA) du cadre de maintien (H) est formée par une face intérieure de la face de butée conjuguée (GA), de la branche transversale de cadre de maintien (16), qui, en raccordement à l'ouverture de montage (15), s'écarte en divergeant vers l'extérieur vis-à-vis du centre du cadre de maintien (H), et **en ce que** la butée (A) du cadre de montage (E) est formée par une face extérieure d'une branche transversale (19), de la face de butée (A) qui, à la situation montée du cadre de montage (E), est en appui sur toute la surface sur la face de butée conjuguée (GA).

4. Dispositif à conteneur de transport selon l'une des revendications 1 à 3, **caractérisé en ce que** l'axe de pivotement (SA) est disposé chaque fois dans la zone tournée vers l'ouverture de montage (15) des deux branches principales de cadre de maintien (18) et des deux branches principales de cadre de montage (21).

5. Dispositif à conteneur de transport selon la revendication 4, **caractérisé en ce que** les points de palier de pivotement conjugué (SW) situés côté cadre de maintien, traversés par l'axe de pivotement (SA), et les points de palier de pivotement (S), situés côté cadre de montage, leurs correspondant, sont formés par des évidements de palier (29, 38, 44) s'engageant les uns dans les autres de façon désolidarisable et/ou par des saillies formant palier (34, 40, 41).

6. Dispositif à conteneur de transport selon la revendication 5, **caractérisé en ce que**, du côté du cadre de maintien (H), chaque évidement de palier (29, 38, 44), sur sa face opposée à l'ouverture de montage (15) et sur sa face tournée vers la butée conjuguée (GA) forme une face d'appui (35, 35 ; 39 ; 39) pour une saillie formant palier (34, 40, 41) du cadre de montage (E).

7. Dispositif à conteneur de transport selon la revendication 5, **caractérisé en ce que**, du côté du cadre de montage (E), chaque évidement de palier forme, sur sa face tournée vers l'ouverture de montage (15) et sur sa face tournée vers la butée (A), une face de butée pour une saillie formant palier du cadre de maintien (H).

8. Dispositif à conteneur de transport selon l'une des revendications 5 à 7, **caractérisé en ce que** les évidements de palier (29, 38, 44) et/ou les saillies formant palier (34, 40, 41) sont disposés sur les faces intérieures (45) des branches principales de cadre de maintien (18) et sur les faces extérieures (46) des branches principales de cadre de montage (21).

9. Dispositif à conteneur de transport selon l'une des revendications 5 à 8, **caractérisé en ce que** chaque évidement de palier (29) forme une zone de rainure en forme d'encoche, rectangulaire allongée, délimitée, côté extrémité, par d'étroites faces de fermeture (30, 31), zone dans laquelle s'engage une saillie formant palier (34) du genre d'une bande, ayant un contour à peu près rectangulaire allongé et présentant des faces conjuguées de fermeture (32, 33) correspondantes.

10. Dispositif à conteneur de transport selon l'une des revendications 5 à 8, **caractérisé en ce que** chaque évidement de palier (38, 44) présente un contour en demi-cercle, et **en ce que** la saillie formant palier (40, 41), lui correspondant à peu près, forme un tourillon de palier présentant une surface de section transversale en demi-cercle ou en cercle complet.

11. Dispositif à conteneur de transport selon la revendication 10, **caractérisé en ce que** chaque évidement de palier (38, 44) à profil en demi-cercle est disposé devant un canal d'insertion (43), muni d'une ouverture d'insertion (42), pour la saillie formant palier (40, 41).

12. Dispositif à conteneur de transport selon l'une des revendications 1 à 11, **caractérisé en ce que** la branche transversale de cadre de maintien (17), espacée par une butée conjuguée (GA), forme une butée conjuguée de blocage (47), en particulier plate, sur laquelle, lorsque le cadre de maintien (E) est à l'état monté, vient en appui une butée de blocage (48) située côté cadre de montage, en particulier plate, empêchant tout déplacement du cadre de montage (E) à peu près parallèlement à l'ouverture de montage (15).

13. Dispositif à conteneur de transport selon l'une des revendications 1 à 12, **caractérisé en ce que** le dispositif de verrouillage (27, 28) est associé conjointement à la branche transversale de cadre de maintien (17) espacée de la butée conjuguée (GA) et à la branche transversale de cadre de montage (20) espacée de la butée (A).

14. Dispositif à conteneur de transport selon l'une des revendications 1 à 13, **caractérisé en ce que** le dispositif de verrouillage (27, 28) est formé par un tourillon de verrouillage (27) mobile, actionnable par un élément d'actionnement, par exemple par une touche d'actionnement manuel (24), et par un évidement de verrouillage (28), coopérant avec le tourillon de verrouillage (27).

15. Dispositif à conteneur de transport selon la revendication 14, **caractérisé en ce que** le tourillon de verrouillage (27) est en forme de bande et, en lui correspondant, l'évidement de verrouillage (28) est formé en rainure de verrouillage rectangulaire allongée, en particulier avec une section transversale de rainure à peu près en forme de U.

16. Dispositif à conteneur de transport selon l'une des revendications 1 à 15, **caractérisé en ce que** les parties (27, 24) mobiles du dispositif de verrouillage (27, 24 ; 28) sont associées au cadre de montage (E), et leurs parties (28) non mobiles sont associées au cadre de maintien (H).

17. Dispositif à conteneur de transport selon l'une des revendications 14 à 16, **caractérisé en ce que** le tourillon de verrouillage (27) et, le cas échéant, son élément d'actionnement (24), sont associés au cadre de montage (E), et **en ce que** l'évidement de verrouillage (28) est associé au cadre de maintien (H).

18. Dispositif à conteneur de transport selon l'une des revendications 1 à 17, **caractérisé en ce que** le cadre de maintien (H) forme une partie de montage en une ou plusieurs parties, maintenue côté véhicule, constituant un canal d'évidement de chargement (D).

19. Dispositif à conteneur de transport selon la revendication 18, **caractérisé en ce que** le cadre de maintien (H) est formé de deux moitiés de cadres de maintien (HF, HK), s'engageant l'une dans l'autre avec une liaison à ajustement de forme.

20. Dispositif à conteneur de transport selon la revendication 19, **caractérisé en ce que** chaque moitié de cadre de maintien (HF, HK) présente une zone formant douille (52, 53) et chaque fois une zone formant bride (54, 55) disposée à l'extrémité de la zone formant douille (52, 53), les deux zones formant bride (54, 55) s'écartant l'une de l'autre.

21. Dispositif à conteneur de transport selon la revendication 20, **caractérisé en ce que** les zones formant douille (52, 53) des deux moitiés de cadre de maintien (HF, HK) s'engagent l'une dans l'autre de façon télescopique.

22. Dispositif à conteneur de transport selon l'une des revendications 19 à 21, **caractérisé en ce que** les deux moitiés de cadre de maintien (HF, HK) sont fixées l'une à l'autre par une liaison à ajustement de forme.

23. Dispositif à conteneur de transport selon la revendication 22, **caractérisé en ce que** les deux moitiés de cadre de maintien (HF, HK) sont fixées ensemble par enfichage dans une zone de fixation, tandis qu'une liaison vissée (68, 69) est prévue sur une zone de fixation opposée.

24. Dispositif à conteneur de transport selon l'une des revendications 19 à 23, **caractérisé en ce que** la zone formant douille (53) d'une moitié de cadre de maintien (HK) est munie d'un tourillon d'enfichage (56), en saillie parallèlement au plan de la zone formant bride (55) voisine, tandis que la zone formant douille (52) de l'autre moitié de cadre de maintien (HF) présente au moins une ouverture d'enfichage (57) coopérant avec le tourillon d'enfichage (56).

25. Dispositif à conteneur de transport selon l'une des revendications 14 à 24, **caractérisé en ce que** le au moins un évidement de verrouillage (28), pour le au moins un tourillon de verrouillage (27) mobile, est formé par un composant (B) du genre d'une tôle de fermeture, maintenu à l'aide des deux moitiés de cadre de maintien (HF, HK).

26. Dispositif à conteneur de transport selon la revendication 25, **caractérisé en ce que** le composant (B) du genre d'une tôle de fermeture est maintenu dans le joint télescopique (T), entre les zones formant douille (52, 53) des deux moitiés de cadre de maintien (HF, HK).

27. Dispositif à conteneur de transport selon l'une des revendications 22 à 26, **caractérisé en ce que** le composant (B) du genre d'une tôle de fermeture est inséré dans le joint télescopique (T), entre les zones formant douille (52, 53) des deux moitiés de cadre de maintien (HF, HK), et présente le au moins un évidement de fixation (28), traversé par le ou les tourillons d'enfichage (56) de la zone formant douille (53) d'une moitié de cadre de maintien (HK).

28. Dispositif à conteneur de transport selon la revendication 27, **caractérisé en ce que** l'évidement de verrouillage (28) forme en même temps l'évidement de fixation.

29. Dispositif à conteneur de transport selon la revendication 28, **caractérisé en ce que** l'évidement de verrouillage (28), du composant (B) du genre d'une tôle de fermeture, présente une forme de base à peu près rectangulaire allongée, ayant des zones d'extrémité côté étroit arrondies, et **en ce que** l'évidement de verrouillage (28) est traversé, sur chaque zone d'extrémité étroite, par un tourillon d'enfichage (56).

30. Dispositif à conteneur de transport selon l'une des revendications 1 à 29, **caractérisé en ce que**, au cadre de maintien (H), est associé un élément de maintien (61), ayant une face support de charge (63), qui est tournée dans la direction de sollicitation principale de l'agencement, en particulier dans la direction de roulage (x), et qui appuie sur une face de palier conjugué (64) située côté véhicule.

31. Dispositif à conteneur de transport selon l'une des revendications 25 à 30, **caractérisé en ce que** le composant (B) du genre d'une tôle de fermeture présente une section transversale à peu près en forme de L, avec une branche de verrouillage (60) présentant l'évidement de verrouillage (28) et avec une branche d'appui (61), s'étendant à peu près perpendiculairement à celle-ci.

32. Dispositif à conteneur de transport selon la revendication 30 ou selon la revendication 31, **caractérisé en ce que** la branche d'appui (61) forme l'élément de maintien avec la face support de charge (63).

33. Dispositif à conteneur de transport selon la revendication 32, **caractérisé en ce que** la face support de charge (63) est disposée sur la face intérieure de la branche d'appui (61) du composant (B) du genre d'une tôle de fermeture.

34. Dispositif à conteneur de transport selon l'une des revendications 19 à 33, **caractérisé en ce que** la zone formant douille (52) de la moitié de cadre de maintien (HF) située côté arrière du véhicule présente une plus grande largeur que la zone formant douille (53) de la moitié de cadre de maintien (HK) située coffre à bagages.

35. Dispositif à conteneur de transport selon la revendication 34, **caractérisé en ce que** la branche de verrouillage (60) du composant (B) du genre d'une tôle de fermeture est disposée dans le joint télescopique (T) entre la zone formant douille (52) extérieure de la moitié de cadre de maintien (HF) côté arrière du véhicule et la zone formant douille (53) intérieure de la moitié de cadre de maintien (HK), côté coffre à bagages.

36. Dispositif à conteneur de transport selon la revendication 35, **caractérisé en ce qu'**un composant (11), formant la face de palier conjugué (64), située côté véhicule, est disposé entre la face frontale (62) de la zone formant douille (52) de la moitié de cadre de maintien (HF) située côté arrière du véhicule et la face intérieure formant la face support de charge (63) de la branche d'appui (61) du composant (B) du genre d'une tôle de fermeture.

37. Dispositif à conteneur de transport selon l'une des revendications 1 à 36, **caractérisé en ce que**, sur l'embrasure (L), tournée vers le cadre de montage (E), du cadre de maintien (H) est disposé un joint d'étanchéité (66) entourant la paroi extérieure du cadre de montage (E).

38. Dispositif à conteneur de transport selon l'une des revendications 26 à 37, **caractérisé en ce que**, entre les deux zones formant douille (52, 53) des deux moitiés de cadre de maintien (HF, HK) et, au reste, au voisinage du composant (B) du genre d'une tôle de fermeture le long de l'embrasure (L) du cadre de maintien (H), est formée une rainure de logement (70) pour le joint d'étanchéité (66).

39. Dispositif à conteneur de transport selon l'une des revendications 25 à 38, **caractérisé en ce que** le composant (B) du genre d'une tôle de fermeture forme une zone de captage d'énergie, déformable plastiquement en cas de sollicitation suite à une collision.
